# EUROPEAN PATENT APPLICATION

(11) **EP 2 587 814 A1**
(43) Date of publication of application: **01.05.2013**
(21) Application number: 11186443.5
(22) Date of filing: 25.10.2011
(51) Int. Cl.: H04N 13/04

(54) **Depth adaptation for multi-view system**

(71) Applicant: Telefonaktiebolaget L M Ericsson AB (Publ), 164 83 Stockholm (SE)
(72) Inventor: Kampmann, Markus, 52072 Aachen (DE); Grafulla-González, Beatriz, 227 36 LUND (SE)
(74) Representative: Romare, Laila Anette

(57) **Abstract**

In a multi-view autostereoscopic display system (100) a plurality of views (120,122,124,126) is displayed repeatedly within a plurality of adjacent viewing cones (107,111,113), where pairs of views among the plurality of views form stereoscopic view pairs. A first set of depth adaptation settings, e.g. baseline and disparity, and at least one further set of depth adaptation settings, e.g. baseline and disparity, are obtained, the at least one further set of depth adaptation settings is different from the first set of depth adaptation settings. The first set of depth adaptation settings is then set for a first subset of views among the plurality of views in all viewing cones. The at least one further set of depth adaptation settings is set for at least one further respective subset of views among said plurality of views in all viewing cones. A simple solution is thereby provided of adapting the system to provide viewers/users with individually adapted depth adaptation settings and thereby providing an enhanced 3D viewing experience to a plurality of simultaneous viewers.

## Description

### TECHNICAL FIELD

The present disclosure relates to controlling a multi-view autostereoscopic display system and in particular to controlling depth adaptation settings for a plurality of users of the display system.

### BACKGROUND

In traditional two-dimensional (2D) video display systems, one single view is generated and displayed at a 2D display. An extension to 2D video is stereo video, where two views are generated and displayed at a stereo or three-dimensional (3D) display. In such systems, one view is provided for a viewer's left eye whereas the other view is provided for the viewer's right eye. In order to separate the views for the left and right eye, respectively, glasses are commonly used which separate the views either in the temporal domain (shutter glasses) or via polarization filtering. Needless to say, from the perspective of the viewer, wearing glasses limits the comfort of 3D viewing.

3D display systems that are capable of providing a stereo view without the need for specially adapted glasses are so-called autostereoscopic display systems. One class of autostereoscopic display systems is multi-view display systems. In such systems, several slightly different views (typically 9 views, up to 27 views) are displayed in a so called viewing zone or viewing "cone". Usually, one single viewer will view the display from within such a cone. In this cone two neighboring views builds a stereo view pair. If the viewer moves his head, sequentially different stereo view pairs will be viewed by the viewer. This results in a perceived effect of looking at a 3D scene from different viewing angles.

In a multi-user multi-view display system these cones are typically repeated several times allowing multiple viewers to look at the display simultaneously perceiving depth impression. In such systems the depth settings, i.e. parameters that are used by the video processing functions in the systems in order to provide the view pairs, are the same for all users. However, the perception of depth is typically different from viewer to viewer, since there are physiological factors that differ from person to person. Whereas some persons are comfortable with a certain depth setting, other persons will get headaches or feel sickness. Therefore, an individual depth adaptation is necessary in order to reach a good 3D experience for a wide range of viewers. However, in today's multi-user multi-view display systems, individual depth settings are not possible.

### SUMMARY

It is an object to obviate at least some of the above disadvantages and therefore there is provided, according to a first aspect, an improved method for controlling a multi-view autostereoscopic display system that comprises a number of operations. A plurality of views is displayed repeatedly within a plurality of adjacent viewing cones, where pairs of views among the plurality of views form stereoscopic view pairs. A first set of depth adaptation settings, e.g. baseline and disparity, and at least one further set of depth adaptation settings, e.g. baseline and disparity, are obtained, the at least one further set of depth adaptation settings is different from the first set of depth adaptation settings. The first set of depth adaptation settings is then set for a first subset of views among the plurality of views in all viewing cones. The at least one further set of depth adaptation settings is set for at least one further respective subset of views among said plurality of views in all viewing cones.

That is, a simple solution is provided of adapting a multi-user multi-view autostereoscopic display system to provide viewers/users with individually adapted depth adaptation settings and thereby providing an enhanced 3D viewing experience to a plurality of simultaneous viewers.

A determination can be made of a number of users of the display system, and the number of subsets of views then depends on the determined number of users. Furthermore, embodiments include those where a user input signal is received and a user identifier is determined based on this user input signal. The user identifier is then associated with any one of said sets of depth adaptation settings. Such embodiments provide an increased flexibility of adapting the system to different situations involving varying number of viewers/users.

The obtaining of any one of the sets of depth adaptation settings can comprise receiving a user input signal, determining, based on the user input signal, a user identifier and said any one of said sets of depth adaptation settings, and associating the user identifier with said any one of said sets of depth adaptation settings.

The reception of the user input signal can comprise reception from any of: a user operated remote control unit, a user gesture recognition unit, a voice recognition unit and a user face recognition unit.

Any one of the sets of depth adaptation settings can be stored, the storing being associated with said user identifier.

In other words, such storage can be in the form of a user profile, the contents of which can be retained and from which settings can be obtained at any time.

Embodiments include those that comprise receiving a user position change indication signal that indicates that a user associated with a user identifier has moved from a first position to a second position. A subset of views corresponding to the first position and a subset of views corresponding to the second position are then determined. A set of depth adaptation settings that have been set for the subset of views corresponding to the first position is then identified, and this identified set of depth adaptation settings is then set, in all viewing cones, for the subset of views that corresponds to the second position.

That is, such embodiments relate to situations where, when the system detects a change of user position, it adapts the new views with the current settings.

Embodiments include those that comprise receiving a user position change indication signal that indicates that a user associated with a user identifier has moved from a first position to a second position. A subset of views corresponding to the second position is determined and a set of depth adaptation settings that are associated with the subset of views corresponding to the second position is then calculated, e.g. comprising geometrical calculations involving at least the second position. This calculated set of depth adaptation settings is then set, in all viewing cones, for the subset of views that corresponds to the second position.

That is, such embodiments relate to situations where, when the system detects a change of user position, it estimate the geometrical situation corresponding to the new position, direction and/or angle of the viewer in relation to the system and adapts the views accordingly.

The embodiments that comprise reception of a user position change indication signal can comprise reception from any of: a remote control unit, a head tracking unit, a gesture recognition unit and a face recognition unit.

According to a second aspect, there is provided a computer program product comprising software instructions that, when executed in a processor, performs the method as summarized above.

According to a third aspect, there is provided a multi-view autostereoscopic display system comprising display circuitry for displaying a plurality of views, the displaying being repeated within a plurality of adjacent viewing cones and where pairs of views among said plurality of views form stereoscopic view pairs. The system further comprises obtaining circuitry for obtaining a first set of depth adaptation settings, obtaining circuitry for obtaining at least one further set of depth adaptation settings, said at least one further set of depth adaptation settings being different from the first set of depth adaptation settings. The system also comprises setting circuitry for setting, in all viewing cones, the first set of depth adaptation settings for a first subset of views among said plurality of views, and setting circuitry for setting, in all viewing cones, the at least one further set of depth adaptation settings for at least one further respective subset of views among said plurality of views.

The effects and advantages of these further aspects correspond to the effects and advantages as summarized above in connection with the first aspect.

### BRIEF DESCRIPTION OF THE DRAWINGS

Figure 1 schematically illustrates a multi-user multi-view display system,
figure 2 is a functional block diagram that schematically illustrates a multi-user multi-view display system,
figure 3 is a flowchart of a first embodiment of a method for controlling a multi-user multi-view display system,
figure 4 is a flowchart of a second embodiment of a method for controlling a multi-user multi-view display system, and
figure 5 is a flowchart of a third embodiment of a method for controlling a multi-user multi-view display system.

### DETAILED DESCRIPTION OF EMBODIMENTS

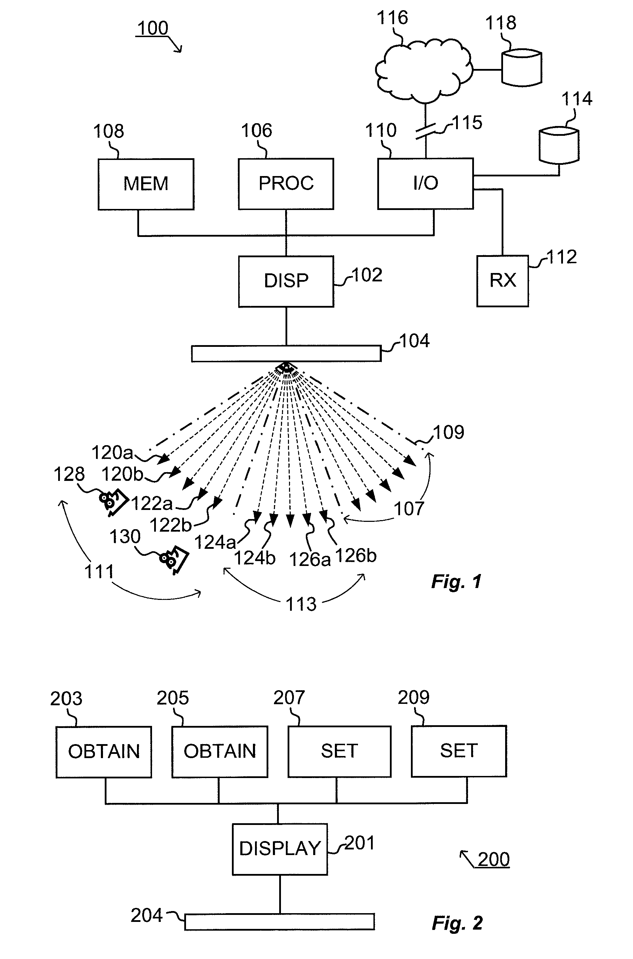

Figure 1 illustrates schematically a multi-user multi-view display system 100. The system comprises a 3D display screen 104, 3D display control circuitry 102, processing circuitry 106, memory 108 and input/output (i/o) interface circuitry 110. The i/o circuitry 110 connects an input signal receiver 112 and a video database 114. An external video database 118 is also connected to the system 100 via a data communication network 116, e.g. Internet, via a network connection 115 and the i/o circuitry 110. The input signal receiver 112 is configured such that it can receive and convey signals to the system 100 from, e.g., a remote control unit that is operated by a viewer. The input signal receiver 112 can also, in some embodiments, be configured such that it can detect and track movement of a viewer, e.g. the head of the viewer, and also recognize facial features or other characteristics of a viewer. Details regarding how signals are received and processed by the signal receiver 112 and other more general operations of the system 100 are known to the skilled person and will not be described in any detail in the present disclosure. However, the actual content and interpretation of signals received in the signal receiver 112 will be described in some detail below. For example, signals received in the signal receiver 112 can comprise information that is interpreted in terms of depth adaptation settings, user identifiers as well as movement of users.

The system generates a plurality of views, examples of which are views illustrated by arrows 120a,b, 122a,b, 124a,b and 126a,b, based on video sequence content obtained from, e.g. databases 114 and 118. The views are pairwise autostereoscopic and hence, as the skilled person will realize, the display screen 104 and the 3D display control circuitry 102 are appropriately configured to generate such view pairs. The views are grouped within viewing cones, an example of which is an angular extent denoted with reference numeral 107 and whose boundary is denoted with reference numeral 109. Other viewing cones are indicated with reference numerals 111 and 113.

A first viewer 128 and a second viewer are located in front of the display screen 104. As the skilled person will realize, the schematically illustrated situation in figure 1 is a "view from above" and, consequently, figure 1 illustrates a situation where the first viewer 128 is receiving view 120a in his left eye and view 120b in his right eye. Similarly, the second viewer 130 is receiving views 122a and 122b. Furthermore, as the skilled person will realize, when implementing the system that is schematically illustrated in figure 1, the number of views are typically larger than the number of views shown. An example of an implemented system will have, e.g., 27 views that are repeated in three to six viewing cones.

In order to generate views that provide an acceptable depth perception for a viewer, it is necessary, in the 3D display control circuitry 102, to use appropriate parameters, so-called depth adaptation settings. Depth perception is a combination of multiple factors, both subjective and objective. Each individual user/viewer is different and therefore the 3D/depth perception is different for each person. In order to adapt the depth perception, there are two main parameters: baseline and disparity. Baseline is defined as the distance between the cameras that have generated the views in a view pair, i.e. it is a parameter that affects the actual video capture. It is common to use the expression one, two, three, etc. "baselines", where "baseline" means here an average distance modeling the eye distance. The more spatially separated the cameras are, the more extreme the depth perception is. However, it is important that cameras capture common parts of the scene so that a stereo pair may be created (otherwise, each eye will receive different information, yielding confusion and sickness in the person). On the other hand, disparity is defined as the separation of two stereo images. In other words, the baseline is in such a case fixed, but the images are "separated"/"shifted" in the processing in the 3D display control circuitry 102 in order to adapt the distance between the images to the perception of the user.

Figure 2 illustrates a system 200 similar to the system 100 in figure 1. However, whereas the system 100 in figure 1 is illustrated from a hardware point of view in terms of processing and other circuitry, the system 200 in figure 2 is illustrated from a point of view of functionality. Hence, the system 200 in figure 2 is a multi-view autostereoscopic display system that comprises display circuitry 201, 204 for displaying a plurality of views, the displaying being repeated within a plurality of adjacent viewing cones, and where pairs of views among said plurality of views form stereoscopic view pairs. The system further comprises obtaining circuitry 203 for obtaining a first set of depth adaptation settings and obtaining circuitry 205 for obtaining at least one further set of depth adaptation settings, the at least one further set of depth adaptation settings being different from the first set of depth adaptation settings. Furthermore, the system comprises setting circuitry 207 for setting, in all viewing cones, the first set of depth adaptation settings for a first subset of views among said plurality of views, and setting circuitry 209 for setting, in all viewing cones, the at least one further set of depth adaptation settings for at least one further respective subset of views among said plurality of views.

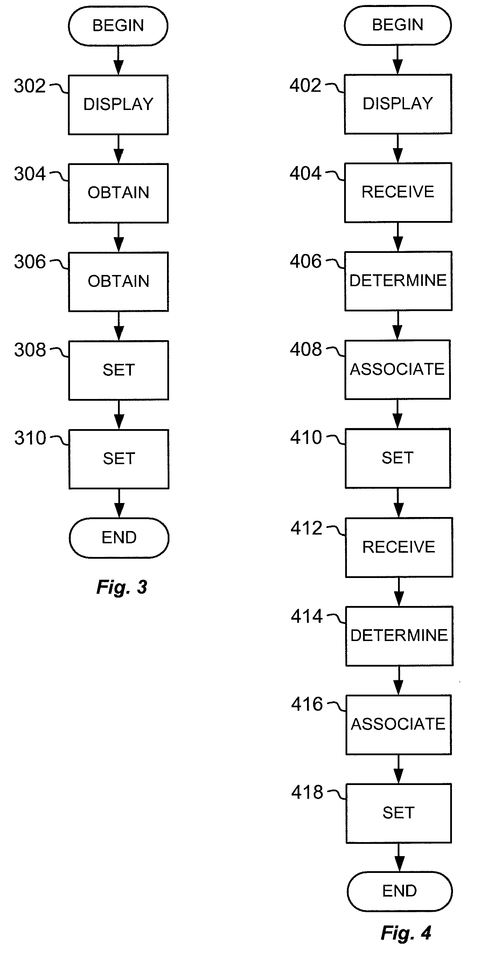

Turning now to figure 3, a flow chart of a method for controlling a multi-view autostereoscopic display system will be described. The method can be realized in a system such as the system 100 in figure 1 as well as in a system such as the system 200 in figure 2. Typically, the method will be realized in the form of a computer program that is executed in processing circuitry such as the processor 106 in figure 1 or in a combination of different processing circuitry as illustrated in figure 2.

The method commences by a plurality of views being displayed in a display step 302, the displaying being repeated within a plurality of adjacent viewing cones and where pairs of views among the plurality of views form stereoscopic view pairs. Although figure 3 may give an impression that the displaying of the views is a "finite" step among other steps in the flow chart, it is to be noted that the displaying of the views continue throughout the flow of the method, as the skilled person will realize. Moreover, a step of determining a number of users of the system can be performed. In such cases, the obtaining steps will be performed in correspondence with the determined number of users.

In a first and a second obtaining step 304, 306 a first set of depth adaptation settings and at least one further set of depth adaptation settings are obtained, respectively, the at least one further set of depth adaptation settings being different from the first set of depth adaptation settings. As the skilled person will realize, the obtaining steps 304, 306 can take place in any order and also take place concurrently. In a first setting step 308 the first set of depth adaptation settings is set for a first subset of views among the plurality of views in all viewing cones. In a second setting step 310 the at least one further set of depth adaptation settings is set for at least one further respective subset of views among the plurality of views in all viewing cones. As the skilled person will realize, the setting steps 308, 310 can take place in any order and also take place concurrently.

With reference to figure 1, the first subset of views are views 120a,b and the at least one further subset of views are views 122a,b. These two subsets of views are repeated in each viewing cone and therefore views 124a,b are identical to views 120a,b and views 126a,b are identical to views 122a,b in terms of depth adaptation settings. Although figure 1 illustrates a situation where the first viewer 128 and the second viewer 130 are positioned such that they are viewing respective subset of views 120a,b and 122a,b within the the same viewing cone 111, it is of course possible for the second viewer to be positioned such that he, e.g., views the subset of views 126a,b having the same depth adaptation settings within viewing cone 113.

Turning now to figure 4, a flow chart of a method for controlling a multi-user multi-view autostereoscopic display system will be described. The method involves two users that provide input to the system in order to individually set depth adaptation settings that provide comfortable 3D viewing conditions. The input from the users can be realized, e.g., by means of a remote control unit operated by way of keystrokes, as well as more advanced detectors such as a gesture recognition unit, a voice recognition unit and a user face recognition unit. The method can be realized in a system such as the system 100 in figure 1 as well as in a system such as the system 200 in figure 2.

Specifically, a plurality of views 120,122,124,126 are displayed in a display step 402, the displaying being repeated within a plurality of adjacent viewing cones 107,111,113 and where pairs of views among the plurality of views form stereoscopic view pairs. As discussed above in connection with the flow chart in figure 3, it is to be noted that the displaying of the views continue throughout the flow of the method, as the skilled person will realize.

In a reception step 404 a first user input signal is received. Based on the received first user input signal, a first user identifier and a first set of depth adaptation settings are determined in a determination step 406, whereupon the first user identifier is associated, in an association step 408, with the first set of depth adaptation settings. In a setting step 410 the first set of depth adaptation settings is set for a first subset of views 120a,b and 124a,b among the plurality of views in all viewing cones.

Corresponding steps are performed in relation to the second user. That is, in a reception step 412 a second user input signal is received. Based on the received second user input signal, a second user identifier and a second set of depth adaptation settings are determined in a determination step 414, whereupon the second user identifier is associated, in an association step 416, with the second set of depth adaptation settings. In a setting step 410 the second set of depth adaptation settings is set for a second subset of views 122a,b and 126a,b among the plurality of views in all viewing cones.

A step of storing any of the sets of depth adaptation settings can be performed in connection with the sequence in figure 4. Such a storing step can associate each user with a set of settings and thereby define a so-called user profile. Such a user profile can be retained for as long as needed and settings can be obtained from such a user profile when required.

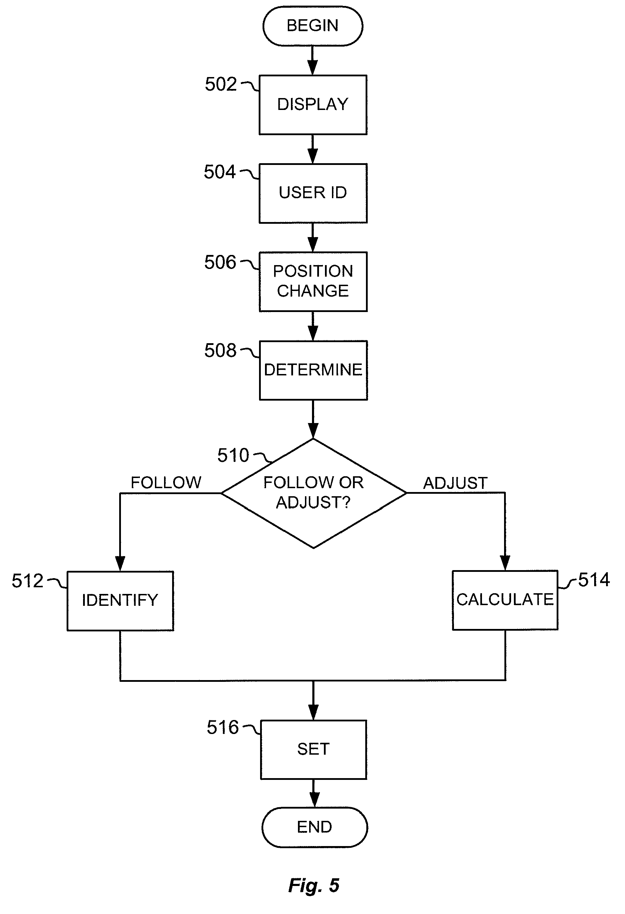

Figure 5 is a flow chart that illustrates embodiments where depth adaptation settings are set in situations where a user moves from a first position to a second position in front of a display system such as the display system 100 in figure 1 and the system in figure 2. As in the previous examples, a plurality of views are displayed in a display step 502, the displaying being repeated within a plurality of adjacent viewing cones and where pairs of views among the plurality of views form stereoscopic view pairs. As discussed above in connection with the flow chart in figure 3 and 4, it is to be noted that the displaying of the views continue throughout the flow of the method, as the skilled person will realize.

A user identifier is determined in an identification step 504 and user position change indication signal is received in a position change detection step 506. These two steps can be seen as a single step in that reception of a user position change indication signal can include the user identifier. The skilled person will, when realizing the method, decide on an exact structure and content of this user position change indication signal. The user may supply the position change indication signal by means of a remote control unit or the position change indication signal may originate from processing in a head tracking unit, a gesture recognition unit or a face recognition unit.

Using the information obtained in the identification step 504 and the position change detection step 506 the method then determines and decides, in a determination step 508 and a decision step 510, how to control the depth adaptation settings for the user that has moved to a new position in front of the display system. A first alternative is that it is the desire of the user that the current depth adaptation settings shall "follow" the user when moving from the first to the second position. In such cases, the determination step 508 comprises determining a subset of views corresponding to the first position and determining a subset of views corresponding to the second position. The set of depth adaptation settings that have been set for the subset of views corresponding to the first position is then identified in an identification step 512. These first position depth adaptation settings are then set, in a setting step 516, in all viewing cones for the subset of views corresponding to the second position.

A second alternative is that it is the desire of the user that the depth adaptation settings shall be "adjusted" or "re-calculated" when moving from the first to the second position. That is, the settings are adjusted to be appropriate for the second position at which the user is located. In such cases, the determination step 508 comprises determining a subset of views corresponding to the second position and a calculation is made, in a calculation step 514, of a set of depth adaptation settings that are associated with the subset of views corresponding to the second position. Typically, geometrical calculations are involved. These calculated second position depth adaptation settings are then set, in the setting step 516, in all viewing cones for the subset of views corresponding to the second position.

## Claims

1. A method for controlling a multi-view autostereoscopic display system (100, 200), comprising:
- displaying (302) a plurality of views (120, 122, 124, 126), the displaying being repeated within a plurality of adjacent viewing cones (107), and where pairs of views among said plurality of views form stereoscopic view pairs,
- obtaining (304) a first set of depth adaptation settings,
- obtaining (306) at least one further set of depth adaptation settings, said at least one further set of depth adaptation settings being different from the first set of depth adaptation settings,
- setting (308), in all viewing cones, the first set of depth adaptation settings for a first subset of views among said plurality of views,
- setting (310), in all viewing cones, the at least one further set of depth adaptation settings for at least one further respective subset of views among said plurality of views.

2. The method of claim 1, comprising:
- determining a number of users of the display system, and wherein:
- the number of subsets of views depends on the determined number of users of the display system.

3. The method of claim 1 or 2, comprising:
- receiving (404, 412) a user input signal,
- determining (406, 414), based on the user input signal, a user identifier,
- associating (408, 416) the user identifier with any one of said sets of depth adaptation settings.

4. The method of claim 1 or 2, wherein the obtaining of any one of said sets of depth adaptation settings comprises:
- receiving (404, 412) a user input signal,
- determining (406, 414), based on the user input signal, a user identifier and said any one of said sets of depth adaptation settings, and
- associating (408, 416) the user identifier with said any one of said sets of depth adaptation settings.

5. The method of claim 3 or 4, wherein:
- the reception of the user input signal comprises reception from any of: a user operated remote control unit, a user gesture recognition unit, a voice recognition unit and a user face recognition unit.

6. The method of any of claims 3 to 5, comprising:
- storing any one of said sets of depth adaptation settings, the storing being associated with said user identifier.

7. The method of any of claims 3 to 6, comprising:
- receiving (506) a user position change indication signal that indicates that a user associated with a user identifier has moved from a first position to a second position,
- determining (508) a subset of views corresponding to the first position,
- determining (508) a subset of views corresponding to the second position,
- identifying (512) a set of depth adaptation settings that have been set for the subset of views corresponding to the first position, and
- setting (516), in all viewing cones, the identified set of depth adaptation settings for the subset of views corresponding to the second position.

8. The method of any of claims 3 to 6, comprising:
- receiving (506) a user position change indication signal that indicates that a user associated with a user identifier has moved from a first position to a second position,
- determining (508) a subset of views corresponding to the second position,
- calculating (514) a set of depth adaptation settings that are associated with the subset of views corresponding to the second position, and
- setting (516), in all viewing cones, the calculated set of depth adaptation settings for the subset of views corresponding to the second position.

9. The method of claim 8, wherein the calculation of the set of depth adaptation settings comprises geometrical calculations involving at least the second position.

10. The method of any of claims 7 to 9, wherein:
- the reception of the user position change indication signal comprises reception from any of: a remote control unit, a head tracking unit, a gesture recognition unit and a face recognition unit.

11. The method of any of claims 1 to 10, wherein the depth adaptation settings comprise any of baseline and disparity.

12. A computer program product comprising software instructions that, when executed in a processor, performs the method of any of claims 1 to 10.

13. A multi-view autostereoscopic display system (100, 200), comprising:
- display circuitry (102, 104, 201, 204) for displaying a plurality of views (120, 122, 124, 126), the displaying being repeated within a plurality of adjacent viewing cones (107), and where pairs of views among said plurality of views form stereoscopic view pairs,
- obtaining circuitry (203) for obtaining a first set of depth adaptation settings,
- obtaining circuitry (203) for obtaining at least one further set of depth adaptation settings, said at least one further set of depth adaptation settings being different from the first set of depth adaptation settings,
- setting circuitry (205) for setting, in all viewing cones, the first set of depth adaptation settings for a first subset of views among said plurality of views,
- setting circuitry (205) for setting, in all viewing cones, the at least one further set of depth adaptation settings for at least one further respective subset of views among said plurality of views.
